# EUROPEAN PATENT APPLICATION

(11) **EP 3 627 071 A1**
(43) Date of publication of application: **25.03.2020**
(21) Application number: 18194995.9
(22) Date of filing: 18.09.2018
(51) Int. Cl.: F25B 15/04

(54) **AQUA-AMMONIA ABSORPTION REFRIGERATION SYSTEM**

(71) Applicant: CASALE SA, 6900 Lugano (CH)
(72) Inventor: PANZA, Sergio, 22100 Como (IT); MAZZAMUTO CARLUCCI, Marco, 22069 Rovellasca (CO) (IT); TALARICO, Pasquale, 6962 Viganello (CH); BARATTO, Francesco, 22100 Como (IT)
(74) Representative: Zardi, Marco

(57) **Abstract**

An aqua/ammonia absorption refrigeration process wherein: liquid ammonia is evaporated to produce ammonia vapors a refrigeration effect; ammonia vapors are absorbed in a lean aqueous solution of ammonia, obtaining a rich solution; gaseous ammonia is desorbed at high pressure from the rich solution to obtain gaseous ammonia and regenerate a lean solution; the gaseous ammonia is condensed and expanded to low pressure for further use in the evaporator, wherein the absorption step comprises: cooling and condensing a biphasic mixture of gaseous ammonia and lean solution in at least one evaporative condenser.

## Description

### Field of the invention

The invention relates to an aqua/ammonia absorption refrigeration system and a method for revamping the same. A preferred application concerns an absorption refrigeration system for regrigeration of a process gas of a plant for the synthesis of ammonia.

### Prior art

An aqua/ammonia absorption refrigeration system essentially comprises:
an ammonia evaporator wherein a substantially pure liquid ammonia is evaporated;
an absorber wherein ammonia vapors from the evaporator are absorbed by a lean solution of ammonia and water (aqua/ammonia solution), producing a rich solution and releasing some heat to a cooling medium;
a desorber wherein gaseous ammonia is extracted from said rich solution and the above mentioned lean solution is separated for further use in the absorber;
a condenser wherein the gaseous ammonia withdrawn from the desorber is condensed to provide the liquid ammonia which is again directed to the evaporator.

The evaporation of ammonia in the evaporator produces the desired regriferation, e.g. by removing heat from another stream.

The driving force of the process is the heat furnished to the desorber for separation of the refrigerant vapors from the rich solution. Compared to a conventional vapor compression refrigeration system (VCRS), an absorption refrigeration system uses low-temperature heat instead of electric power as source of energy to produce a refrigeration effect.

The above system is also known as AARP (aqua ammonia refrigeration plant).

The evaporator and the absorber are operated at a first pressure; the desorber and the air cooler are operated at a second pressure, which is higher than the first pressure. Generally the first pressure is comprised between vacuum and 5 bar.

The terms of lean solution and rich solution refers to the content of ammonia in the aqueous solution, i.e. the lean solution contain less ammonia than the rich solution.

Absorption refrigeration systems are used, among others, for the refrigeration of a process gas in ammonia plants. Accordingly, the process gas transfers heat to the ammonia evaporator. For example the ammonia evaporator is an indirect heat exchanger with the process gas bo refrigerated on one side and the evaporating ammonia on the other side.

An ammonia plant essentially comprises a front-end section for the production of a make-up synthesis gas comprising H₂ and N₂ from a hydrocarbon feedstock, a compression section for elevating the pressure of the make-up gas to the synthesis pressure and a synthesis loop for the catalytic conversion of the make-up gas into a product gas predominantly made of ammonia.

Said make-up and product gas are produced at elevated temperatures and the heat content of said gas is usually recovered in a number of heat exchangers in series, including for example waste heat boilers and/or boiler feed water (BFW). Absorption refrigeration systems are typically used for cooling the product gas downstream of a water cooler or a gas-gas exchanger, in order to condense and separate the ammonia from said product gas.

There is an incentive to revamp the current ammonia plants, for increasing their capacity in terms of ammonia that is or can be produced, and/or to reduce the consumption of energy or other valuables.

In a aqua/ammonia refrigeration system, the absorber releases heat and, therefore, requires a cooling medium. Said cooling medium in most cases (particularly in the ammonia plants) is fresh cooling water. However cooling water may be available only in a limited amount and its use as a cooling medium is a source of cost. Therefore, in the context of revamping a plant for the synthesis of ammonia, there is an incentive to improve also the aqua/ammonia refrigeration system.

### Summary of the invention

The aim of the invention is to solve the above drawbacks of the prior art. The invention aims to increase the efficiency of a aqua/ammonia refrigeration system. Particularly, the invention aims to reduce the consumption of cooling water for regriferation of the absorber. The invention also aims to a method for revamping a aqua/ammonia refrigeration system, particularly when said refrigeration system is part of an ammonia plant and is used for refrigeration of at least one process gas of the ammonia synthesis.

The above aims are reached with a process according to claim 1. The invention modifies the absorption step introducing a preliminary stage performed in an evaporative condenser. The absorption step comprises: mixing gaseous ammonia from the evaporation step and lean solution of ammonia obtaining a biphasic mixture; at least partially condensing said biphasic mixture in at least one evaporative condenser; feeding the so obtained mixture, which is at least partially condensed, to an absorber where any remaining gaseous ammonia can be absorbed in the lean solution.

Another aspect of the invention is a aqua/ammonia refrigeration system according to the claims.

Another aspect of the invention is a method for revamping a aqua/ammonia refrigeration system, according to the claims.

Some preferred embodiments are stated in the attached dependent claims.

The gasous ammonia and the lean solution can mix before they enter the evaporative condenser or can mix directly in the evaporative condenser, according to different embodiments.

Said evaporative condenser provides that the mixture of gaseous ammonia and lean solution transfers heat indirectly (i.e. without direct contact) to an evaporating medium, which is usually water, in a closed loop. Said water, in turn, transfers heat to ambient air by direct contact.

Prreferably, said biphasic mixture of gasoues ammonia and lean solution passes internally in at least one heat exchange body of the evaporative condenser; cooling water is sprayed over the outer surface of said heat exchange body; ambient air is circulated in the evaporative condenser and in direct contact with the sprayed cooling water. The heat and mass transfer with the ambient air cools down the water that can be recirculated in a closed loop. Accordingly, it can be said that the actual heat sink of the evaporative condenser is ambient air and the regrigeration effect that can be achieved depend on the temperature and humidity of the ambient air.

Said heat exchange body is internally traversed by the mixture and has an outer surface exposed to the evaporating cooling water and air. Said heat exchange body for example is a condensing tube, more preferably a coil tube. Said heat exchange body can be finned to promote heat exchange. Water is sprayed over the surface of the heat exchange body causing at least a portion of the sprayed water to evaporate and remove heat. Preferably the sprayed water and air flow are counter-current, the water flowing downward and the air flowing upward. Water can be collected at the bottom of the evaporative condenser.

The evaporative condenser provides at least a partial condensation of the biphasic mixture of ammonia gas and lean solution, reducing the heat to be removed in the absorber, for example transferred to the cooling water of the absorber. Accordingly, it reduces the amount of cooling water required to operate the absorber.

In some embodiments, the at least one evaporative condenser provides a partial condensation of the mixture. A first portion of the gaseous ammonia contained in said biphasic mixture is condensed in said at least one evaporative condenser, and a second portion of said gaseous ammonia is condensed in the absorber. Preferably said first portion and second portion account for the full or substantially the full (e.g. at least 99%) amount of gaseous ammonia initially contained in the mixture.

In some embodiments, the at least one evaporative condenser provides a full condensation of the gaseous ammonia contained in the mixture. The term of full condensation denotes that gaseous ammonia is completely condensed, apart from a residual amount of uncondensed ammonia due to vapor-liquid equilibrium in the condenser and the presence of non-condensable fraction. In a full condensation embodiment, preferably at least 99% of the gaseous ammonia is condensed.

The at least one evaporative condenser, therefore, may be designed to achieve full condensation under normal operation; the downstream absorber may provide a subcooling of the condensate effluent and may provides a guard in the event that some gaseous ammonia remains in the effluent of the evaporative condenser, e.g. due to working conditions less favourable to the condensation of ammonia.

The mixing of gaseous ammonia from the ammonia evaporator and lean ammonia solution produces a biphasic mixture having preferably a vapor fraction of 5% to 20%. The vapor fraction is made predominantly of gaseous ammonia.

The applicant has found that this mixture has a relatively high temperature of about 50 °C, for example in the range of 45 to 65 °C. The present invention suggests that this mixture can be cooled and partially condensed in an evaporative condenser due to its relatively high temperature compared to ambient temperature.

For example, in a preferred embodiment, the evaporative condenser can be designed to cool the mixture of ammonia vapors and lean solution to a temperature of 30 to 40 °C.

In a preferred embodiment, the vapor fraction of said biphasic mixture is reduced by at least 30%, preferably by at least 50%, in the evaporative condenser. Accordingly, the mixture at the inlet of the evaporative condenser has a first vapor fraction and the mixture effluent from the evaporative condenser has a second vapor fraction and said second vapor fraction is 0.5 to 0.7 times the first vapor fraction.

The feed of the evaporative condenser may comprise the full amount of the gasous ammonia from the evaporative condenser and of the lean solution from the desorber, or only a portion thereof. Preferably the full amount of gaseous ammonia is used.

In some embodiments, the lean solution is split between the evaporative condenser and the absorber. Particularly, a first portion of the lean solution is mixed with the gaseous ammonia to form the feed of the evaporative condenser, and a second portion of the lean solution is mixed with the effluent of the evaporative condenser. Said first portion of the lean solution, which is preferably 20% to 100% said second portion of the lean solution is the remaining portion to 100%.

Splitting the lean solution may be advantageous, in some embodiments, to reduce the capital cost of the evaporative condenser.

In accordance with the above, also a part of the process of absorption takes place in the evaporative condenser, wherein the gasous ammonia is condensed to liquid phase and passes into the aqueous solution, thus enriching the solution.

In the prior art, the heat removed from the gaseous ammonia and lean solution is entirely transferred to the cooling water of the absorber. In the invention, on the other hand, part of this heat is discharged to ambient through the evaporative condenser. Therefore, the need of cooling water is reduced.

Still another advantage is that the capacity of the lean solution to absorb gasous ammonia depends not only on the concentration of ammonia in the solution, but also from the temperature of the solution. Particularly, a lower temperature corresponds to a greater capacity of absorbing ammonia. Therefore, cooling the solution in the evaporative condenser enhances the performance of the downstream absorber, that is the amount of gasous ammonia that can be transferred to the solution.

Another advantage of the invention is that the saved cooling water, no longer required by the absorber, can be directed to another use. For example, in a plant for the synthesis of ammonia, the saved cooling water may be used in one or more AARPs to deliver an additional refrigeration capacity or in a Li-Br absorption unit.

The advantages of the invention will emerge even more clearly with the aid of the detailed description below relating to a preferred embodiment.

### Description of the figures

Fig. 1 is a simplified scheme of an aqua-ammonia absorption refrigeration plant according to the prior art;
Fig. 2 shows the scheme of Fig. 1 modified in accordance with an embodiment of the invention.
Fig. 3 shows another embodiment of the invention.
Fig. 4 shows another embodiment of the invention.

### Detailed description

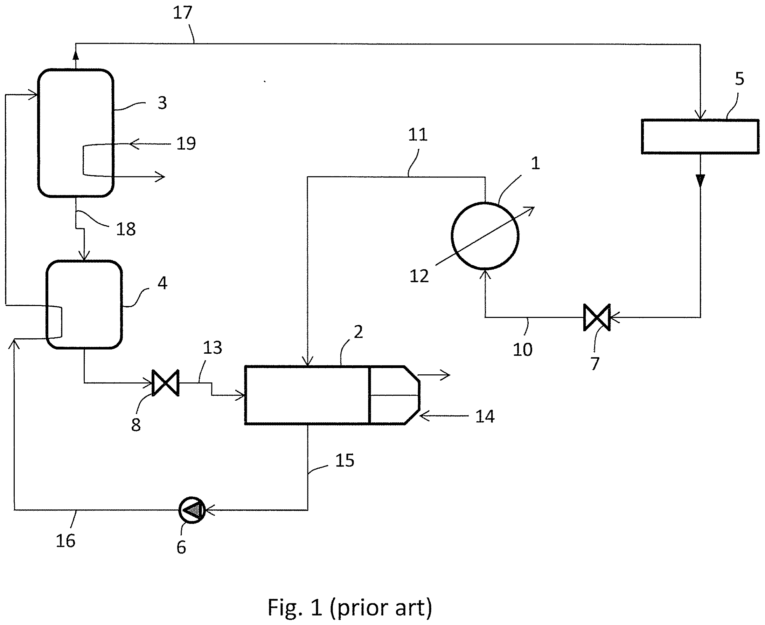

Fig. 1 illustrates a aqua/ammonia absorption refrigeration system comprising: ammonia evaporator 1, absorber 2, desorber 3 with a heat exchanger 4, condenser 5, ammonia solution pump 6, letdown valves 7 and 8.

A liquid ammonia 10 evaporates in the ammonia evaporator 1. Evaporation of the liquid ammonia 10 produces gaseous ammonia (ammonia vapors) 11 and cools a stream 12 producing a refrigeration effect. This stream 12 for example is a process stream of synthesis of ammonia.

The gaseous ammonia 11 is absorbed in a lean aqueous solution of ammonia 13, in the absorber 2. The mixture of gaseous ammonia and lean solution releases heat to a cooling water 14 of the absorber 2. Said absorber 2 is for example a shell-and-tube apparatus wherein the cooling water 14 circulates in the tube side.

A rich ammonia solution 15 is withdrawn from the absorber 2. This rich solution 15 is pumped by the ammonia solution pump 6 to the heat exchanger 4 and then to the desorber 3.

The high-pressure rich solution 16 delivered by the pump 6 is preheated in the heat exchanger 4 and reaches the desorber 3.

Said desorber 3 extracts gaseous ammonia 17 from the rich solution and regenerates a lean aqueous solution of ammonia 18. The desorption process requires a heat input given by a heating medium 19, e.g. low-pressure steam.

The desorber 3 can be a fractionation column in a preferred embodiment, wherein the gaseous ammonia emerges from top of the column and the regenerated lean solution is recovered from bottom.

The lean aqueous solution of ammonia 18 preheats the incoming rich solution in the heat exchanger 4 and, after de-pressurization in the letdown valve 8, forms the lean solution stream 13 directed to the absorber 2.

The gaseous ammonia 17 taken from the desorber 3 is condensed in the condenser 5, which is for example an air condenser. The so obtained high-pressure liquid ammonia 20 is de-pressurized through the letdown valve 7 and forms the liquid ammonia stream 10 directed to the evaporator 1.

There can be a cooling step (not shown) of the gaseous ammonia 17 before condensation in the condenser 5. Also, there can be a heat recovery between the liquid ammonia 10 and the gaseous ammonia 11.

It can be appreciated that the main energy input from the process is the heating medium 19, that provides heat for regeneration of the lean solution. On the other hand, the process transfers a considerable amount of heat to the cooling water 14 and, therefore, requires a large amount of said water.

The evaporator 1 and the absorber 2 operate at a first pressure and the desorber 3 and condenser 5 operate at a second pressure which is greater than the first. The pump 6 and the valves 7, 8 define a high-pressure side and a low-pressure side of the process. In common embodiments, the low pressure is in the range 100 to 450 kPa and the high pressure is in the range 900 to 1400 kPa.

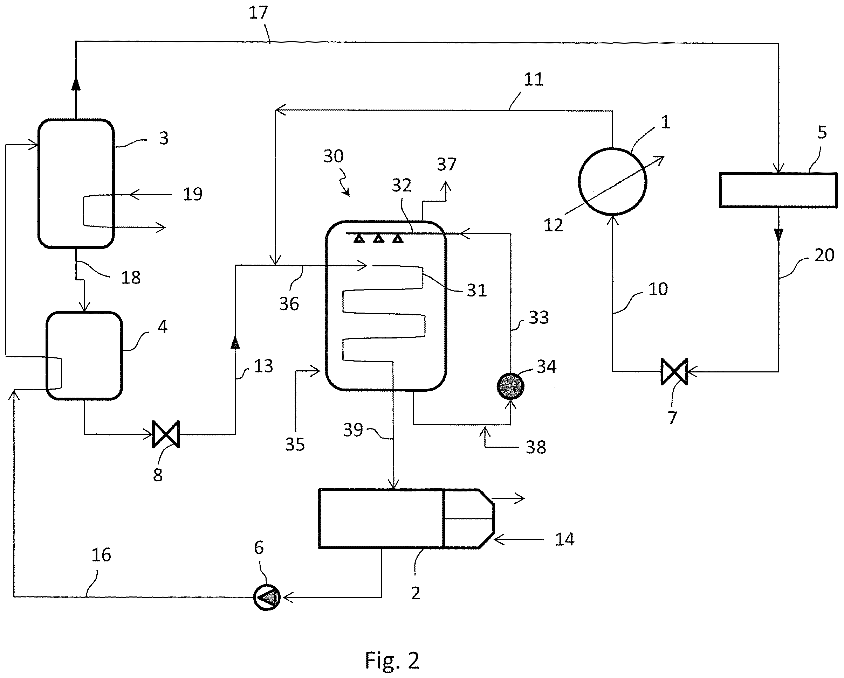

Fig. 2 illustrates the scheme modified according to a an embodiment of the invention. Fig. 2 uses the same numerals as Fig. 1 for corresponding features, which therefore need not be described again.

An evaporative condenser 30 is provided between the evaporator 1 and the absorber 2. Said evaporative condenser belongs to the low-pressure part of the plant, that is operates substantially as the same pressure as the absorber.

The evaporative condenser 30 comprises a coil tube 31 and a sprayer 32. Water 33 is collected from bottom of the condenser 30 and sprayed over the coil tube 31 with a pump 34. The evaporative condenser 30 has also an inlet for ambient air 35.

The gaseous ammonia 11 and the lean solution 13 mixes to form a biphasic mixture 36 and said biphasic mixture 36 is fed into the coil tube 31. While flowing through the tube 31, the mixture 36 is cooled and partially condensed due to heat transferred to the water 33 sprayed over the coil tube 31, which evaporates partially.

The sprayed water falls in direct counter-current contact with the air 35. As a result, some water vapor is transferred to the air increasing its humidity and the temperature of the water is reduced. The air leaves the condenser as air stream 37 which has a greater humidity than the inlet stream 35. Preferably the outlet stream 37 is saturated or nearly saturated.

The water 33 is in a closed loop apart from integration 38 which compensates for the mass transferred to the air.

The cooled and partially condensed biphasic mixture leaves the evaporative condenser 30 as stream 39, which is directed to the downstream absorber 2.

It can be understood that the heat which can be removed by the evaporative condenser 30 depends ultimately on the wet bulb temperature of the ambient air 35. The wet bulb temperature depends on the temperature and humidity of the air according to a known relationship.

For example if ambient air 35 has a temperature of 28 °C and relative humidity of 65%, the wet bulb temperature is 22.5 °C. Assuming an approach temperature difference in the evaporative condenser of 14 °C, the incoming mixture 36 can be cooled to about 36.5 °C. The mixture 36, in most cases, has a temperature in the range 45 to 65 °C. This means that the evaporative condenser 30 can reduce significantly the temperature of the mixture 36 and, therefore, can reduce significantly the duty of the absorber 2 and the amount of cooling water 14 required for its operation.

For example the inlet mixture 36 has a vapor fraction about 12% while the outlet mixture 39 has a vapor fraction of about 6% to 7%.

Under certain conditions of low temperature of the air, the evaporative condenser may be able to remove a sufficient heat from the mixture without the help of the water 33. In such a case the spraying of water 33 may be temporarily interrupted, so that the evaporative condenser works as an air cooler.

The invention can be applied to the revamping of an ammonia plant including an AARP as depicted in Fig. 1. The stream 12 in this case is a process stream of the synthesis of ammonia. For example the stream 12 may be a hot makeup gas (containing N2 and H2) for the synthesis of ammonia, or ammonia gas produced in an ammonia converter.

The method of revamping may include the provision of the evaporative converter 30 between the ammonia evaporator 1 and the absorber 2 and the related piping connections, for example as in Fig. 2.

The lean solution 13 and gasous ammonia 11 can mix in a suitable device.

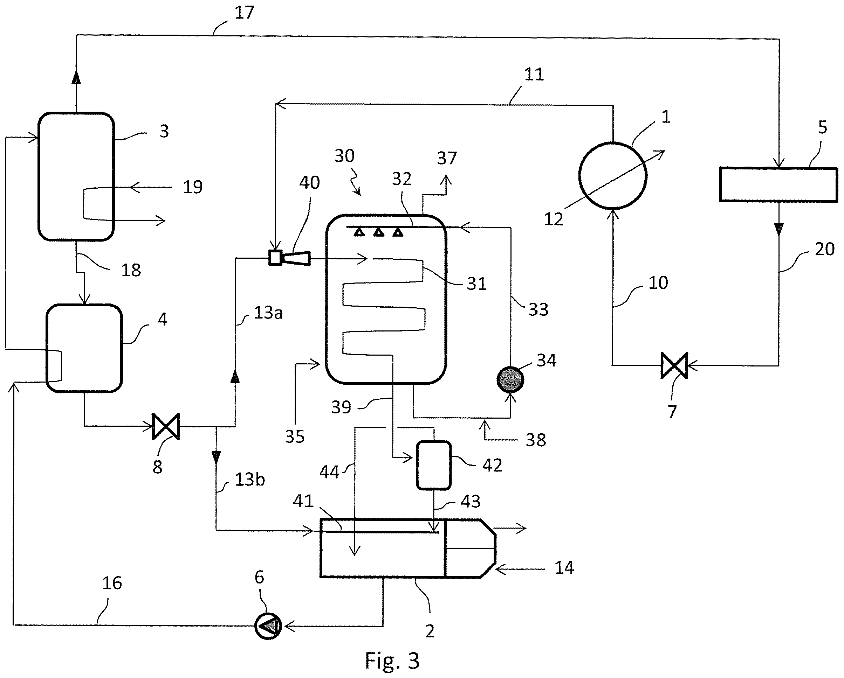

Fig. 3 illustrates an embodiment where an ejector 40 is used to mix the lean solution and gasous ammonia directed to the condenser 30.

Particularly, in the shown embodiment, only a portion 13a of the lean solution is directed to said ejector 40. The remaining portion 13b of lean solution is sent to the absorber 2, where it is sprayed in the shell side with a sprayer 41.

The effluent 39 of the evaporative condenser 30 is fed to a gas/liquid separator 42. The liquid fraction 43 is sent to the sprayer 41 together with the lean solution 13b while the gasous fraction 43 is fed to the shell side for condensation.

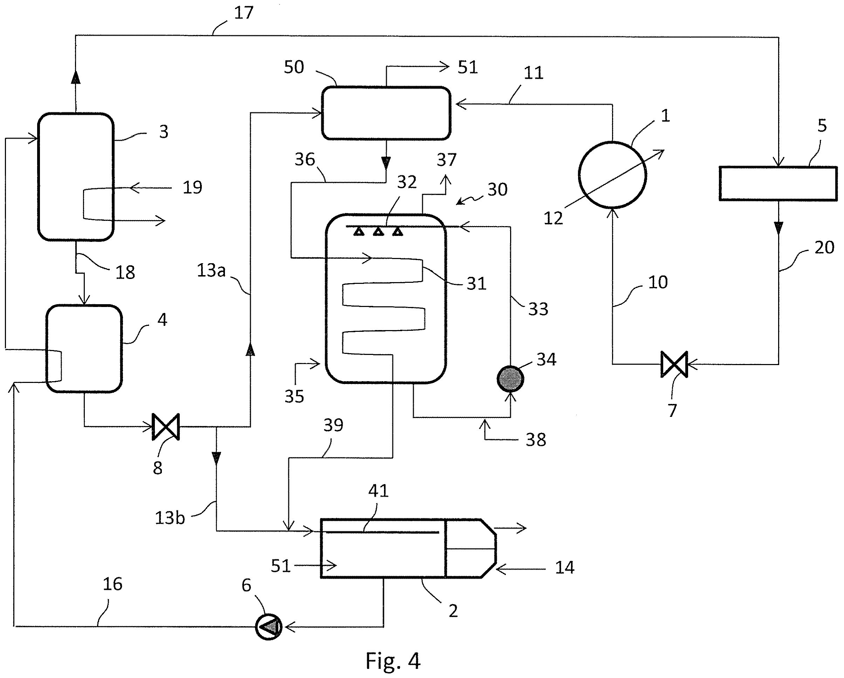

Fig. 4 illustrates another embodiment providing a contactor vessel 50 usptream the evaporative condenser 30. In the contactor vessel 50 the gaseous ammonia 11 is brought into contact with the lean solution 13a. The mixture 36 directed to the evaporative condenser 30 is taken from the vessel 50. A stream of gaseous ammonia 51 emerging from top of the vessel 50 is sent to the shell side of the absorber 2. The effluent 39 of the evaporative condenser 30 mixes with the lean solution 13b to form the liquid feed sprayed in the absorber 2 via the sprayer 41.

### Example

The following is a comparative example. Table 1 contains data of a base scheme according to the prior art (Fig. 1) while Table 2 contains data of an embodiment of the invention according to Fig. 2. The comparison shows that the required amount of cooling water (stream 14) is reduced by 50%.

| Table 1 | | | | | |
|---|---|---|---|---|---|
| Base case (Fig. 1) | | | | | |
| Stream | 10 | 11 | 13 | 15 | 14 |
| Description | Liquid ammonia | Ammonia vapor | Lean Aqua/NH3 | Rich Aqua/NH3 | Cooling water |
| Vapor fraction | 0.00 | 0.999 | 0.00 | 0.00 | 0.00 |
| Temperature [°C] | 31 | 11 | 46 | 33.5 | 30 |
| Pressure [kPa] | 1200 | 277 | 1200 | 277 | 400 |
| Flow rate [10³ kg/h] | 23 | 23 | 210 | 233 | 1128 |
| %wt H2O | 0.01 | 0.01 | 0.645 | 0.581 | 1.00 |
| %wt NH3 | 0.999 | 0.999 | 0.355 | 0.419 | 0.00 |

| Table 2 | | | | | | |
|---|---|---|---|---|---|---|
| Modified case (Fig. 2) | | | | | | |
| Stream | 10 | 11 | 13 | 39 | 15 | 14 |
| Description | Liquid ammonia | Ammonia vapor | Lean Aqua/NH3 | Rich Aqua/NH3 | Rich Aqua/NH3 | Cooling water |
| Vapor fraction | 0.00 | 0.999 | 0.00 | 0.04 | 0.00 | 0.00 |
| Temperature [°C] | 31 | 11 | 46 | 36.4 | 33.5 | 30 |
| Pressure [kPa] | 1200 | 277.6 | 1200 | 277 | 277 | 400 |
| Flow rate [10³ kg/h] | 23 | 23 | 210 | 233 | 233 | 624 |
| %wt H2O | 0.01 | 0.01 | 0.645 | 0.581 | 0.581 | 1.00 |
| %wt NH3 | 0.999 | 0.999 | 0.355 | 0.419 | 0.419 | 0.00 |

## Claims

1. An aqua/ammonia absorption refrigeration process comprising the steps of:
an evaporation step comprising the evaporation of liquid ammonia (10) in an ammonia evaporator (1) and producing gaseous ammonia (11) and a refrigeration effect;
an absorption step comprising absorption of said gaseous ammonia in a lean aqueous solution of ammonia (13) and removal of heat during the absorption process, producing a rich aqueous solution of ammonia (16),
a desorption step comprising the extraction of gaseous ammonia (17) from said rich solution in a desorber (3), obtaining gaseous ammonia and a lean solution (18) for further use in the absorption step;
condensation of gaseous ammonia (17) obtained in the desorption step to provide liquid ammonia for further use in the evaporator,
wherein the evaporation step and absorption step are performed at a first pressure and the desorption step and condensation are performed at a second pressure, which is higher than said first pressure,
**characterized in that** the absorption step comprises: mixing at least a portion of said gaseous ammonia (11) from the evaporation step and at least a portion of said lean solution of ammonia (13) obtaining a biphasic mixture (36); feeding said biphasic mixture to at least one evaporative condenser (30) wherein at least a portion of the gaseous ammonia contained in said mixture is condensed; feeding the so obtained effluent mixture (39), which is at least partially condensed, to an absorber (2).

2. A process according to claim 1, wherein: a first portion of the gaseous ammonia contained in said biphasic mixture is condensed in said at least one evaporative condenser, and a second portion of said gaseous ammonia is condensed in the absorber.

3. A process according to claim 1, wherein all the gaseous ammonia contained in said biphasic mixture is condensed in said at least one evaporative condenser.

4. A process according to any one of claims 1 to 3 wherein the gaseous ammonia withdrawn from the ammonia evaporator has a temperature in the range -33 °C to 20 °C.

5. A process according to any one of claims 1 to 4 wherein the biphasic mixture resulting from the mixing of gaseous ammonia and lean solution has a vapor molar fraction in the range 5% to 20%.

6. A process according to any of the previous claims wherein the biphasic mixture resulting from the mixing of gaseous ammonia and lean solution has a temperature in the range of 45 to 65 °C.

7. A process according to claim 6, wherein the biphasic mixture is cooled in the at least one evaporative condenser to a temperature of 30 to 40 °C.

8. A process according to any of the previous claims wherein, in the evaporative condenser, the vapor fraction of said biphasic mixture is reduced by at least 30% by condensation of gaseous ammonia.

9. A process according to any of the previous claims, wherein: in the evaporative condenser, said biphasic mixture passes internally in at least one heat exchange body (31); cooling water (33) is sprayed over the outer surface of said heat exchange body; ambient air (35) is circulated in the evaporative condenser and in direct contact with the sprayed cooling water.

10. A process according to any of the previous claims, wherein: a first portion (13a) of the lean aqueous solution from the desorber is mixed with gaseous ammonia to form the biphasic mixture sent to the evaporative condenser, and a second portion (13b) of said solution is mixed with at least partially condensate stream (39, 43) from the evaporative condenser (30) to form the input of the downstream absorber.

11. A process according to claim 10, wherein said first portion of lean aqueous solution is 20% to 100% of the total lean solution withdrawn from the desorber.

12. A process according to any of the previous claims wherein said absorber uses water as a cooling medium.

13. An aqua/ammonia absorption refrigeration system comprising:
an ammonia evaporator (1) wherein a liquid ammonia (10) is evaporated;
an absorber (2) arranged for absorption of gaseous ammonia into a lean aqueous solution of ammonia, to produce a rich aqueous solution of ammonia;
a desorber (3) wherein gaseous ammonia is extracted from said rich solution and a lean solution is separated for further use in the absorber;
a condenser (5) wherein the gaseous ammonia withdrawn from the desorber is condensed to provide liquid ammonia for further use in the evaporator,
**characterized by** comprising at least one evaporative condenser (30) which is located between the ammonia evaporator and the absorber, wherein a biphasic mixture (36), containing gaseous ammonia from said ammonia evaporator and lean aqueous solution from said desorber, is cooled and at least partially condensed in the at least one evaporative condenser, and the so obtained at least partially condensed effluent of the at least one evaporative condenser is sent to the absorber.

14. A method for revamping a aqua/ammonia refrigeration system, wherein:
the aqua/ammonia refrigeration system comprises an ammonia evaporator (1), an absorber (2), a desorber (3) and a condenser (5);
wherein, in the aqua/ammonia refrigeration system, liquid ammonia is evaporated in the ammonia evaporator; a so obtained stream of gaseous ammonia is absorbed in a lean aqueous ammonia solution in the absorber, producing a rich aqueous ammonia solution; gaseous ammonia is extracted from the rich solution in the desorber, thus regenerating the lean solution, and the gaseous ammonia is then condensed to liquid ammonia in the condenser;
the method of revamping comprising the installation of at least one evaporative condenser (30) between the evaporator (5) and the absorber (2), and the installation of a line arranged to feed gaseous ammonia (11) withdrawn from the evaporator (1), and lean aqueous ammonia solution (13) from the desorber (3), to said at least one evaporative condenser (30), wherein a biphasic mixture (36) of said gaseous ammonia and lean solution is partially condensed, and the partially condensed mixture effluent from said evaporative condenser is sent to the absorber (2).

15. A method according to claim 14, wherein the aqua/ammonia refrigeration system is part of a plant for the synthesis of ammonia and is used for the refrigeration of at least one process stream of the ammonia synthesis process.
